# EUROPÄISCHE PATENTSCHRIFT

(11) **EP 3 738 753 B1**
(45) Veröffentlichungstag und Bekanntmachung des Hinweises auf die Patenterteilung: **07.06.2023**
(21) Anmeldenummer: 20174228.5
(22) Anmeldetag: 12.05.2020
(51) Int. Cl.: B29C 70/08, D02G 3/00, B29C 70/16, D02J 1/18, D02G 3/04, D01D 11/02, B29D 99/00, D06C 3/00, B29C 70/50, D02G 3/40, D04H 3/04

(54) **VERFAHREN UND VORRICHTUNG ZUR HERSTELLUNG EINES HYBRIDFASERBÜNDELS**
METHOD AND DEVICE FOR PRODUCING HYBRID FIBRE BUNDLE
PROCÉDÉ ET DISPOSITIF DE FABRICATION D'UN FAISCEAU DE FIBRES HYBRIDES

(30) Priorität: 14.05.2019 DE 102019112555
(43) Veröffentlichungstag der Anmeldung: 18.11.2020
(73) Patentinhaber: Cetex Institut gGmbH, 09120 Chemnitz (DE)
(72) Erfinder: Nendel, Sebastian, 09577 Niederwiesa (DE); Meyer, Marcel, 09217 Burgstädt (DE); Mehlhorn, Falk, 09112 Chemnitz (DE); Dudhat, Vaibhavbhai, 09126 Chemnitz (DE); Bauer, Thomas, 04279 Leipzig (DE); Neumann, Henry, 09119 Chemnitz (DE); Endlicher, Sören, 09224 Lichtenau (DE); Komso, Sonja, 09116 Chemnitz (DE); Heinrich, Hans-Jürgen, 09247 Röhrsdorf (DE)
(74) Vertreter: Steiniger, Carmen

(56) Entgegenhaltungen:
- EP-A1- 3 428 056
- WO-A1-02/081790
- US-B2- 10 151 053

## Beschreibung

Die vorliegende Erfindung betrifft ein Verfahren zur Herstellung eines Hybridfaserbündels, bei dem in einem Spreizschritt in einer ersten Ebene einer Vorrichtung ein erstes Faserbündel mit Fasern eines ersten Materials, bevorzugt eines Matrixmaterials, und in einer zweiten Ebene der Vorrichtung ein zweites Faserbündel mit Fasern eines zweiten Materials, bevorzugt eines Verstärkungsmaterials, jeweils über zueinander versetzte, beheizte Umlenkstäbe geführt und dadurch getrennt voneinander gespreizt werden und anschließend in einem Zusammenführschritt einander überdeckend aufeinandergelegt werden. Die Erfindung betrifft ferner eine Vorrichtung zur Herstellung eines Hybridfaserbündels, aufweisend wenigstens drei erste, in einer ersten Ebene der Vorrichtung zueinander versetzt angeordnete, beheizbare Umlenkstäbe, und wenigstens drei zweite, in einer zweiten Ebene der Vorrichtung zueinander versetzt angeordnete, beheizbare Umlenkstäbe, wobei die zweite Ebene oberhalb der ersten Ebene ist.

Aufgrund der Forderung nach CO₂-Reduktion und Ressourcenschonung kommt Leichtbaustrukturen eine immer größere Bedeutung zu. Dabei spielen textile Verstärkungsstrukturen für Hochleistungsanwendungen im Strukturleichtbau eine entscheidende Rolle. Zum Einsatz kommen dabei vermehrt thermoplastische Matrixsysteme aufgrund der kurzen Zykluszeiten im Herstellungsprozess und ihrer Recyclingfähigkeit.

Faserverstärkte Kunststoffe weisen Verstärkungsfasern und eine Kunststoffmatrix, welche die Fasern umgibt, auf, wobei die mechanischen und thermischen Eigenschaften von faserverstärkten Kunststoffen über eine Vielzahl von Parametern eingestellt werden können. Beispielsweise können die Eigenschaften von faserverstärkten Kunststoffen durch Variation der Faserausrichtung, des Faservolumenanteils, der Schichtreihenfolge und -ausbildung, der Faserlänge, der Eigenschaften der Fasern und/oder des Matrixwerkstoffes beeinflusst werden.

Die Druckschrift DE 40 36 926 A1 beschreibt ein Verfahren zur Herstellung von Hybridgarn aus Thermoplastfasern und Verstärkungsfasern, wobei die Fasern jeweils für sich zu einem Band aufgespreizt werden und die beiden Bänder über Rollen oder Stäbe zusammengeführt und homogen vermischt werden. Die Spreizung wird so durchgeführt, dass das Verstärkungsfaserband um 20 bis 100 % breiter ist als das Thermoplastfaserband. Das Hybridgarn kann geschlichtet und zu Gewebe weiterverarbeitet werden, das zu Faserverbundwerkstoffen verpresst werden kann. Insbesondere erfolgt die Spreizung der Verstärkungsfasern sowie der Matrixfasern über das Bestrahlen der Fasern mit Flüssigkeit oder Gas. Hier kann es zu Verwirbelungen innerhalb der Faserstruktur kommen, was ein solches Verfahren unwirtschaftlich gestaltet.

In der Druckschrift DE 196 24 412 A1 ist ein Mehrkomponentengarn enthaltend Fasern aus einer ersten und einer zweiten Komponente beschrieben, wobei die zweite Komponente ein spinnbares thermoplastisches Polymer ist, welches einen Schmelzpunkt aufweist, der mindestens 10 °C unter dem Schmelz- oder Zersetzungspunkt der ersten Komponente liegt, und wobei das Mehrkomponentengarn in Längsrichtung abwechselnd Bereiche aufweist, in denen Fasern durch An- oder Aufschmelzen der zweiten Komponente zumindest zum Teil miteinander verbunden sind, und Bereiche aufweist, in denen keine derartigen Verbindungen vorliegen. Ebenfalls beschrieben ist ein textiles Flächengebilde, hergestellt aus den beschriebenen Mehrkomponentengarnen sowie ein Verfahren zur Herstellung des oben definierten Mehrkomponentengarns. Des Weiteren wird die Herstellung von Textilien beschrieben, welche das Mehrkomponentengarn enthalten. Dabei wird das Mehrkomponentengarn vorzugsweise ebenfalls durch Verwirbeln oder Verzwirnen erhalten.

Die Druckschrift WO 02/081790 A1 offenbart ein Verfahren zum Herstellen eines Hybridfaserbündels, bei welchem in einer ersten Ebene einer Vorrichtung ein nicht schmelzendes, strukturiertes Faserbündel durch Führen über mehrere Walzen aufgespreizt wird und zugleich in einer zweiten Ebene der Vorrichtung ein Matrixmaterialfaserbündel aus thermoplastischen Filamenten aufgespreizt wird. Die aufgespreizten Faserbündel werden anschließend mittels einer Sammelwalze zu einem Hybridfaserbündel zusammengeführt.

Die Druckschrift DE 10 2008 061 314 B4 beschreibt ein Verfahren zur Herstellung eines Faserbandes, bei dem parallel geführte Faserbündel gleicher oder unterschiedlicher Faserfeinheit in mehreren Ebenen überspreizt, die getrennt gespreizten Ebenen dann überlappend zusammengeführt und hierdurch mechanisch verfestigt werden. Diese Lösung ist jedoch nur zum Doublieren von Fadenscharen zwecks Einstellung einer definierten Flächenmasse geeignet. Eine Durchmischung der Fasern ist nicht möglich.

Bei diesen bereits bekannten Verfahren liegen die einzelnen Komponenten der Verstärkungsfasern und der Matrixfasern nicht in vollständig gestreckter Form vor, wodurch in weiteren Verarbeitungsschritten Filamentbrüche entstehen können und nicht die optimalen Eigenschaften im Verbund ausgenutzt werden können. Ein weiterer Nachteil ist die relativ inhomogene Durchmischung der Verstärkungsfasern mit den Matrixfasern, wodurch es den hochviskosen Thermoplasten erschwert wird, im Weiterverarbeitungsprozess jedes einzelne Verstärkungsfilament zu umschließen. Wird jedoch nicht jedes Einzelfilament vollständig mit Matrix umschlossen, kann es zum vorzeitigen Versagen im Verbund kommen.

In der Druckschrift DE 10 2009 056 189 A1 ist eine Vorrichtung zum Erzeugen einer UD-Lage aus einer Anzahl gleichartiger Filamentstränge beschrieben. Die Filamentstränge werden stets parallel zueinander zunächst über ein erstes Lieferwerk geführt, durchlaufen dann eine Speicheranordnung, danach eine Aufspreizanordnung mit einfachen Umlenkrollen, daraufhin eine Spannungsmesseinrichtung, dann ein zweites Lieferwerk und eine weitere Speicheranordnung und werden schließlich auf einen Baum aufgewickelt. In dem ersten und zweiten Lieferwerk verlaufen die Filamentstränge zwischen jeweils zwei in unterschiedlichen Ebenen befindlichen Lieferwerkswalzen U-förmig.

Die Druckschrift DE 10 2005 008 705 B3 offenbart eine Vorrichtung zum Zuführen von Faserbändern zu einer Wirkmaschine. Dabei werden von einem Spulengatter Faserbänder abgezogen, über einen Bandspeicher mit einer drei beheizte Umlenkstäbe aufweisenden Heizeinrichtung gezogen, durch ein Lieferwerk geführt und danach durch einen Heizkanal gezogen, an dessen Eingang und Ausgang jeweils auf gleicher Höhe beheizte Umlenkstäbe vorgesehen sind. Dabei verlaufen die Faserbänder stets parallel, im Abstand zueinander.

Die Druckschrift EP 0 602 618 A1 beschreibt ein Verfahren zur Herstellung von Hybridfasersträngen. Dabei werden von einem Spulengatter abgezogene thermoplastische Multifilamentfaserstränge auf ein gespreiztes Band aus Verstärkungsfasern auf einer Rolle abgelegt, die übereinandergelegten Faserstränge nachfolgend über mehrere Umlenkrollen geführt und schließlich zu einem gemeinsamen Hybridfaserstrang zusammengeführt. Der entstehende Hybridfaserstrang weist eine ungleichmäßige Verteilung von thermoplastischen Fasern auf.

Aus der Druckschrift US 5,000,807 A geht ein Verfahren zum Herstellen von aus mehreren Multifilamentgarnen aus Polyetheretherketon (PEEK) und Multifilamentgraphitgarn zusammengesetzten Hybridfasersträngen hervor. Die PEEK-Multifilamentgarne werden von Vorratsrollen abgezogen, zusammengeführt, durch ein Klemmwalzenpaar geführt und über spezielle teflonbeschichtete Rollen geleitet, um eine elektrische Spannung zwischen den PEEK-Multifilamentgarnen zu erzeugen, sodass diese einander abstoßen. Das Multifilamentgraphitgarn wird ebenfalls durch ein Klemmwalzenpaar geführt, passiert mehrere Umlenkrollen und einen Luftschleier und wird dann mit den PEEK-Multifilamentgarnen zu einem Hybridfaserstrang zusammengeführt. Der Hybridfaserstrang wird daraufhin mit einer Schlichte besprüht und schließlich aufgewickelt.

Die Druckschrift US 2017/0232704 A1 enthält ein Verfahren zum Herstellen eines Bandes aus parallel verlaufenden Verstärkungsfasern, wobei auf beiden Seiten des Bandes eine Polymerschicht konstanter Dicke vorgesehen ist.

Der Erfindung liegt somit die Aufgabe zugrunde, ein Verfahren und eine Vorrichtung zur Herstellung einer Hybridfaserstruktur aus vorgelegten Faserbündeln zu schaffen, bei welchen eine möglichst homogene Durchmischung der eingesetzten Komponenten in gestreckter Lage gewährleistet wird. Ferner soll ein entsprechend hergestelltes Hybridfaserbündel zur Verfügung gestellt werden.

Diese Aufgabe wird zum einen durch ein Verfahren gemäß Anspruch 1 zur Herstellung eines Hybridfaserbündels gelöst.

Im Folgenden werden an manchen Textstellen die Fasern eines Matrixmaterials vereinfacht als Matrixfasern bezeichnet und die Fasern des Verstärkungsmaterials vereinfacht als Verstärkungsfasern bezeichnet. Ferner wird an manchen Stellen das Material der Matrixfasern vereinfacht als Matrixfasermaterial und das Material der Verstärkungsfasern vereinfacht als Verstärkungsfasermaterial bezeichnet.

Das erfindungsgemäße Verfahren gestattet es, Hybridfaserstrukturen in ausgezeichneter Qualität und mit hoher Belastbarkeit zu erzeugen.

Vorteilhafterweise liegen die Filamente im Mischfaserband völlig gestreckt vor, während gleichzeitig die homogene Durchmischung flexibel einstellbar ist. Die flexible Einstellung der homogenen Durchmischung kann dabei durch die Variation der Mengen der Fasern des ersten Materials, bevorzugt des Matrixmaterials, und des zweiten Materials, bevorzugt des Verstärkungsmaterials, erlangt werden.

Unter omegaförmig wird verstanden, dass der Umschlingungswinkel des Mischfaserbandes um die Lieferwerkswalzen jeweils wenigstens 270° beträgt. Das Mischfaserband wird zudem nahezu schlupffrei abgezogen. Vorteilhafterweise liegen am Ausgang des Lieferwerkes alle Filamente als homogen gemischtes Hybridfaserbündel vor.

Durch den omegaförmigen Verlauf des Mischfaserbandes über die Lieferwerkswalzen werden die Fasern des ersten Materials, bevorzugt die Matrixfasern, und die Fasern des zweiten Materials, bevorzugt die Verstärkungsfasern, ineinander gedrückt und es kommt zu einer homogenen Durchmischung. Alternativ kann der Verlauf des Mischfaserbandes auch mäanderförmig sein, wobei der Umschlingungswinkel des Mischfaserbandes um die Lieferwerkswalzen jeweils wenigstens 180° beträgt. Vorteilhafterweise wird das Mischfaserband dann über eine höhere Anzahl Lieferwerkswalzen geführt, um eine ausreichend hohe Durchmischung der Fasern zu gewährleisten.

Die Faserbündel werden eingangsseitig bevorzugt von einem elektronisch geregelten Ablaufgatter abgezogen.

Vorzugsweise wird als erstes Material, bevorzugt als Matrixmaterial, ein elastisches und/oder thermoplastisches Material oder Materialgemisch verwendet.

Als Fasern des zweiten Materials, bevorzugt als Fasern des Verstärkungsmaterials, werden insbesondere Basaltfasern, Kohlefasern, Glasfasern, Aramidfasern, Metallfasern, Naturfasern, hochfeste Polymerfasern oder Gemische aus den vorgenannten Fasern verwendet. Denkbar ist auch eine Verwendung von alternativen Verstärkungsfasern oder Verstärkungsfasergemischen.

Vorzugsweise liegt der Schmelzpunkt des verwendeten ersten Materials, bevorzugt Matrixfasermaterials, unter dem des verwendeten zweiten Materials, bevorzugt Verstärkungsfasermaterials, bevorzugt mindestens 10 K, besonders bevorzugt mindestens 30 K unter dem Schmelzpunkt des zweiten Materials, bevorzugt Verstärkungsfasermaterials.

Die Umlenkstäbe, über welche die Faserbündel in dem Spreizschritt geführt werden, sind beheizt und in ihrer Höhe verstellbar. Sowohl die erste, als auch die zweite Ebene der Vorrichtung wird vorzugsweise mit je einem Servomotor, je einem Riemengetriebe und je einem Spindelhubgetriebe sowie Linearführungen vertikal verstellt. Die Umlenkstäbe sind Rohre, die mit einer gehärteten Oberfläche versehen sind und zudem mittels Heizpatronen elektrisch beheizt werden können. Die Einspreiztiefe, die für die unterschiedliche Ausbreitung der Faserbündel durch unterschiedliche Umschlingung der Filamente und somit unterschiedliche Reibung verantwortlich ist, kann ebenso wie die Heiztemperatur für jede der beiden Spreizebenen unterschiedlich eingestellt werden.

Durch das Beheizen der Umlenkstäbe wird die Schlichte, welche die Fasern der einzelnen Faserbündel zusammenhält, aktiviert bzw. weicher/geschmeidiger, sodass sich das jeweilige Faserbündel öffnen kann und eine Spreizung möglich ist. Die Temperatur der Umlenkstäbe sollte dabei nicht über 250 °C betragen, um ein Verdampfen und eine Schädigung der Schlichte zu vermeiden. Bevorzugt liegt die Oberflächentemperatur der ersten und der zweiten Umlenkstäbe in einem Bereich von 80 °C bis 150 °C. In diesem Temperaturbereich kommt es zu einer optimalen Erwärmung der Schlichte. Zudem können bei diesen Temperaturen die Fasern des zweiten Materials, bevorzugt des Verstärkungsmaterials, optimal in die vorzugsweise thermoplastischen Fasern des ersten Materials, bevorzugt des Matrixmaterials, eingedrückt werden.

Die ersten und zweiten Faserbündel werden erfindungsgemäß vor und/oder nach dem Spreizschritt S-förmig über jeweils wenigstens zwei Walzen, welche dem Faserverlauf folgende Spuren aufweisen, geführt. Hierdurch wird insbesondere die Zuführung von Drehungen in die Faserspreizung des Spreizschrittes und/oder eines Spreizintensivschrittes verhindert. Derartige Drehungen würden die Qualität des Hybridfaserbündels erheblich negativ beeinflussen. Die Walzen sind dabei bevorzugt mit einer faserschonenden Oberfläche beschichtet.

Prinzipiell ist es auch möglich, im Spreizschritt Faserbündel in mehr als zwei Ebenen parallel zu spreizen und später zusammenzuführen.

Vorteilhafterweise können im Spreizschritt mehrere Faserbündel in einer Ebene ohne Lücke nebeneinander geführt werden. Hierdurch kann ein breiteres Mischfaserband hergestellt werden.

Vorzugsweise werden die gespreizten und übereinandergelegten ersten und zweiten Faserbündel nach dem Übereinanderlegen in einem Spreizintensivierschritt über zueinander versetzte Umlenkstäbe geführt und dabei weiter zu dem Mischfaserband aufgespreizt.

Die in dem Spreizintensivierschritt verwendeten Umlenkstäbe sind in zweckmäßigen Ausführungsformen der Erfindung beheizt und/oder beheizbar. Somit beheizen diese als Spreizstäbe fungierenden Umlenkstäbe der zweiten Spreizeinrichtung die aus den gespreizten und zusammengeführten ersten und zweiten Faserbündeln ausgebildeten Rovings.

Es kommt dabei vorteilhafterweise zu einer noch intensiveren Durchmischung der beiden Faserbündel.

Bei der vorliegenden Erfindung können die Multifilamente der beispielsweise im ersten Faserbündel verwendeten Matrixfasern und die Multifilamente der beispielsweise im zweiten Faserbündel verwendeten Verstärkungsfasern in unterschiedlicher Breite gespreizt werden. Bevorzugt werden das erste und das zweite Faserbündel in dem Spreizschritt auf eine identische Breite gespreizt. Damit wird vorteilhafterweise eine sehr gleichmäßige Verteilung der Einzelfilamente im Hybridfaserbündel gewährleistet.

Es ist jedoch bei der vorliegenden Erfindung auch möglich, dass das erste Faserbündel breiter als das zweite Faserbündel gespreizt wird oder dass das zweite Faserbündel breiter als das erste Faserbündel gespreizt wird.

Wenn aus dem Hybridfaserbündel ein Hybridfaserstrang bzw. Hybridfaserroving ausgebildet werden soll, wird das Hybridfaserbündel vorzugsweise in einem Aufwickelschritt durch eine Öse geführt und der dabei entstehende Hybridfaserstrang bzw. Hybridfaserroving mit einem Kreuzspulenwickler aufgewickelt.

Soll aus dem Hybridfaserbündel ein Hybridfaserband bzw. Hybridfasertape gebildet werden, wird das Hybridfaserbündel vorteilhafterweise in einem Aufwickelschritt mit einem Scheibenspulenwickler aufgewickelt, wobei dem Scheibenspulenwickler gleichzeitig und flächendeckend vorzugsweise mit dem Hybridfaserband wenigstens ein Trennmedium, wie Trennpapier, zugeführt wird.

Durch die Verwendung dieses Trennmediums können sich die Einzelfilamente des Hybridfaserbandes vorteilhafterweise nicht ineinander drücken und eine Abwicklung der Scheibenspulen für die Weiterverarbeitung der Hybridfaserbänder wird ohne Probleme möglich. Bevorzugt wird als Trennmedium Trennpapier verwendet, welches in seiner Breitenabmessung die gleiche Größe wie der innere Abstand zwischen den Begrenzungsscheiben der Scheibenspule aufweist. Diese liegt bevorzugt bei 10 mm bis 75 mm. Alternativ oder zusätzlich zum Trennpapier kann ein anderes geeignetes Trennmittel verwendet werden.

Bei der Herstellung von Hybridfaserbändern bzw. Hybridtapes wird das Hybridfaserbündel bevorzugt vor dem Aufwickelschritt unter einem mit dem Kreuzspulenwickler oder dem Scheibenspulenwickler gekoppelten Tänzer bzw. Tapetänzer entlanggeführt.

Unter einem Tänzer wird dabei eine Tänzerwalze mit wenigstens einem Sensor verstanden. Der Antrieb des Kreuzspulenwicklers oder des Scheibenspulenwicklers kann damit vorteilhafterweise so ausgelegt werden, dass von Beginn der Wicklung (kleiner Durchmesser) bis zur vollen Scheibenspule (großer Durchmesser) eine konstante Spannung des Hybridfaserbandes gewährleistet wird. Zur Überwachung des Spulendurchmessers kommt weiterhin wenigstens ein Sensor, bevorzugt ein Lasersensor, zur Durchmessererfassung zum Einsatz. Der Antrieb erfolgt bevorzugt mit einem Servomotor, an dem ein Planetengetriebe angebracht ist.

Es gibt ein Hybridfaserbündel, hergestellt durch eine Ausführungsform des oben beschriebenen erfindungsgemäßen Verfahrens, aufweisend Fasern eines ersten Materials, bevorzugt Matrixfasern, und Fasern eines zweiten Materials, bevorzugt Verstärkungsfasern, wobei die Fasern des ersten Materials, bevorzugt die Matrixfasern, und die Fasern des zweiten Materials, bevorzugt die Verstärkungsfasern, in dem Hybridfaserbündel in einer homogenen Durchmischung vorliegen.

Das Hybridfaserbündel umfasst eine definierte Einstellung des Faservolumengehaltes oder Fasermassegehaltes sowie eine homogene Verteilung und Mischung der unterschiedlichen Fasern. Zur Einstellung des Fasermassegehaltes wird eine Zielfeinheit des auszubildenden Hybridrovings, also des auszubildenden Hybridfaserbündels, angesetzt, anhand der die entsprechenden ersten Faserbündel, die vorzugsweise Matrixfaserrovings sind, und zweiten Faserbündel, die vorzugsweise Verstärkungsfaserrovings sind, mit dem erfindungsgemäßen Verfahren in der erfindungsgemäßen Vorrichtung vermischt werden.

Das Hybridfaserbündel kann dabei aus allen dem Fachmann bekannten Verstärkungsfasern und allen dem Fachmann bekannten thermoplastischen Matrixfasern gebildet werden.

Bei den Fasern des ersten Materials, bevorzugt den Matrixfasern, handelt es sich vorzugsweise um ein elastisches und/oder thermoplastisches Material.

Die Fasern des zweiten Materials, bevorzugt die Verstärkungsfasern, sind insbesondere Basaltfasern, Kohlefasern, Glasfasern, Aramidfasern, Metallfasern, Naturfasern, hochfeste Polymerfasern oder Gemische aus den vorgenannten. Denkbar ist auch eine Verwendung von alternativen, dem Fachmann bekannten Verstärkungsfasern.

Die Aufgabe wird außerdem durch eine Vorrichtung gemäß Anspruch 7 zur Herstellung eines Hybridfaserbündels gelöst.

Unter omegaförmig wird dabei verstanden, dass der Umschlingungswinkel des Mischfaserbandes um die Lieferwerkswalzen jeweils wenigstens 270° beträgt. Das Mischfaserband wird zudem nahezu schlupffrei abgezogen. Vorteilhafterweise liegen am Ausgang des Lieferwerkes alle Filamente als homogen gemischtes Hybridfaserbündel vor.

Durch den omegaförmigen Verlauf des Mischfaserbandes über die Lieferwerkswalzen werden die Fasern des ersten Materials, bevorzugt die Matrixfasern, und die Fasern des zweiten Materials, bevorzugt die Verstärkungsfasern, ineinander gedrückt und es kommt zu einer homogenen Durchmischung. Alternativ kann der Verlauf des Mischfaserbandes auch mäanderförmig sein, wobei der Umschlingungswinkel des Mischfaserbandes um die Lieferwerkswalzen jeweils wenigstens 180° beträgt. Vorteilhafterweise wird das Mischfaserband dann über eine höhere Anzahl Lieferwerkswalzen geführt, um eine ausreichend hohe Durchmischung der Fasern zu gewährleisten.

Vorzugsweise handelt es sich bei dem Lieferwerk um ein Eydelwein-Lieferwerk.

Erfindungsgemäß weist die Vorrichtung wenigstens einen S-Schlag mit Spuren zur Faserführung enthaltenden Walzen auf. Hierdurch wird insbesondere die Zuführung von Drehungen in die Faserspreizung des Spreizschrittes und/oder des Spreizintensivschrittes verhindert. Derartige Drehungen würden die Qualität des Hybridfaserbündels erheblich negativ beeinflussen. Die Walzen sind dabei bevorzugt mit einer faserschonenden Oberfläche beschichtet.

Bevorzugt weist das Lieferwerk sieben Lieferwerkswalzen auf.

Vorteilhafterweise sind die ersten Umlenkstäbe in der ersten Ebene und/oder die zweiten Umlenkstäbe in der zweiten Ebene unabhängig voneinander in ihrer Höhe und/oder Temperatur einstellbar.

Sowohl die erste als auch die zweite Ebene der Vorrichtung wird vorzugsweise mit je einem Servomotor, je einem Riemengetriebe und je einem Spindelhubgetriebe sowie Linearführungen vertikal verstellt. Die Umlenkstäbe sind Rohre, die mit einer gehärteten Oberfläche versehen sind und zudem mittels Heizpatronen elektrisch beheizt werden können. Die Einspreiztiefe, die für die unterschiedliche Ausbreitung der Faserbündel durch unterschiedliche Umschlingung der Filamente und somit unterschiedliche Reibung verantwortlich ist, kann ebenso wie die Heiztemperatur für jede der beiden Spreizebenen unterschiedlich eingestellt werden.

Durch das Beheizen der Umlenkstäbe wird die Schlichte, welche die Fasern der einzelnen Faserbündel zusammenhält, aktiviert bzw. weicher/geschmeidiger, sodass sich das jeweilige Faserbündel öffnen kann und eine Spreizung möglich ist.

Die Oberflächentemperatur der ersten und der zweiten Umlenkstäbe liegt bevorzugt in einem Bereich bis 250 °C.

Die Temperatur der Umlenkstäbe sollte nicht über 250 °C betragen, um ein Verdampfen und eine Schädigung der Schlichte zu vermeiden.

Bevorzugt liegt die Oberflächentemperatur der ersten und der zweiten Umlenkstäbe in einem Bereich von 80 °C bis 150 °C. In diesem Temperaturbereich kommt es zu einer optimalen Erwärmung der Schlichte. Zudem können bei diesen Temperaturen die Fasern des Verstärkungsmaterials optimal in die vorzugsweise thermoplastischen Fasern des Matrixmaterials eingedrückt werden.

Durch die Erfindung ist es möglich, Hybridfaserstrukturen aus vorgelegten Faserbündeln zu schaffen, bei denen jedes Einzelfilament der Faserbündel in vollständig gestreckter Form vorliegt und eine homogene Durchmischung der Einzelfilamente der eingesetzten Komponenten gewährleistet wird. Vorteilhafterweise wird eine unwirtschaftliche Verwirbelung der Fasern vermieden.

Insbesondere kann mit dem erfindungsgemäßen Verfahren und der erfindungsgemäßen Vorrichtung das Mischungsverhältnis zwischen erstem und zweitem Material, bevorzugt zwischen Matrix- und Verstärkungsmaterial, frei eingestellt werden.

Zusätzlich zu dem ersten Faserbündel und dem zweiten Faserbündel kann/können bei der vorliegenden Erfindung zur Ausbildung des Mischfaserbandes und/oder des Hybridfaserbündels noch wenigstens ein weiteres Faserbündel und/oder noch wenigstens ein Einzeldraht und/oder wenigstens ein Einzelfilament verwendet werden.

Vorzugsweise wird dann das wenigstens eine weitere Faserbündel und/oder der wenigstens eine Einzeldraht und/oder das wenigstens eine Einzelfilament in wenigstens einer zusätzlich zu der ersten Ebene und der zweiten Ebene bestehenden weiteren Ebene der Vorrichtung bis zu dem Zusammenführschritt geführt.

In einer vorteilhaften Ausführungsform der Erfindung weist sowohl das erste Faserbündel als auch das wenigstens eine weitere Faserbündel Matrixfasern auf. Die dabei jeweils für das erste Faserbündel und das wenigstens eine weitere Faserbündel verwendeten Matrixfasern können aus dem gleichen Matrixmaterial oder aus unterschiedlichem Matrixmaterial bestehen.

In einer vorteilhaften Ausführungsform der Erfindung weist sowohl das zweite Faserbündel als auch das wenigstens eine weitere Faserbündel Verstärkungsfasern auf. Die dabei jeweils für das zweite Faserbündel und das wenigstens eine weitere Faserbündel verwendeten Verstärkungsfasern können aus dem gleichen Verstärkungsmaterial oder aus unterschiedlichem Verstärkungsmaterial bestehen.

Die in der vorliegenden Erfindung verwendete Bezeichnung "Hybrid" in den Begriffen Hybridfaserbündel, Hybridfaserband, Hybridfaserstrang, Hybridfaserstruktur, Hybridstrang und Hybridroving bedeutet, dass mehrere Komponenten zusammengeführt oder miteinander verbunden sind, wodurch das Hybridfaserbündel, das Hybridfaserband, der Hybridfaserstrang, die Hybridfaserstruktur, der Hybridstrang bzw. der Hybridroving gebildet wurde. Diese mehreren Komponenten können aus gleichen Materialien oder aus zwei oder mehr als zwei unterschiedlichen Materialien bestehen.

Hinsichtlich der für diese Komponenten verwendeten Materialien ist die vorliegende Erfindung nicht auf die Verwendung von Matrixmaterial und/oder Verstärkungsmaterial beschränkt. Vielmehr können für diese Komponenten Fasern oder Faserverbünde aus allen denkbaren Materialien, aus welchen Fasern oder Faserverbünde herstellbar sind, verwendet werden.

Der verwendete Ausdruck Hybridfaserbündel ist eine gebündelte Hybridfaserstruktur.

Die Erfindung wird nachfolgend anhand von Ausführungsbeispielen und zugehörigen Figuren näher erläutert, ohne dabei auf diese beschränkt zu sein.

Es zeigen:
- Figur 1: eine Seitenansicht einer zur Ausführung des erfindungsgemäßen Verfahrens geeigneten erfindungsgemäßen Vorrichtung;
- Figur 2: eine Seitenansicht einer alternativen, zur Ausführung des erfindungsgemäßen Verfahrens geeigneten erfindungsgemäßen Vorrichtung; und
- Figur 3: eine Detailansicht der Überdeckungszone der beiden Filamentebenen.

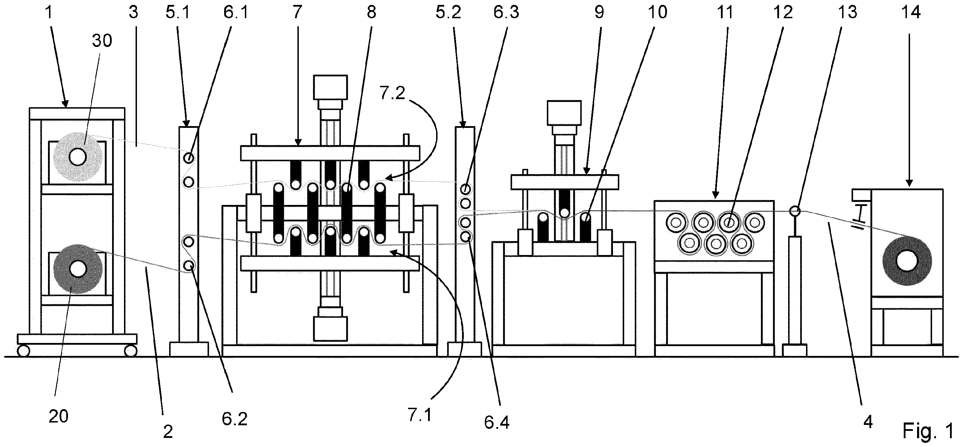

In Figur 1 ist eine Seitenansicht einer zur Ausführung des erfindungsgemäßen Verfahrens geeigneten erfindungsgemäßen Vorrichtung schematisch dargestellt. Die Vorrichtung in Figur 1 dient zur Ausbildung eines Hybridstranges bzw. Hybridrovings.

In der Vorrichtung von Figur 1 werden durch ein vorzugsweise mobiles, elektronisch geregeltes Ablaufgatter 1 Faserbündel 2, 3 mindestens zweier zu mischender Materialien, aus welchen eine Hybridfaserstruktur 4 ausgebildet werden soll, bereitgestellt. Diese Faserbündel 2, 3, die sich aus einer definierten Vielzahl von Einzelfilamenten zusammensetzen, können aus wenigstens einem ersten Material, bevorzugt wenigstens einem thermoplastischen Matrixfasermaterial, wie beispielsweise Polypropylen (PP), Polyamid (PA) und/oder Polyetheretherketon (PEEK), bzw. wenigstens einem zweiten Material, bevorzugt wenigstens einem Verstärkungsfasermaterial, wie beispielsweise Glasfasern, Basaltfasern, Kohlefasern, Aramidfasern, Metallfasern, Naturfasern, hochfesten Polymerfasern, bestehen. Der Faservolumenanteil und/oder der Fasermasseanteil in der fertigen Hybridfaserstruktur 4 bestimmt sich dabei über die Feinheiten der eingesetzten Faserbündel 2, 3.

Das Ablaufgatter 1 weist in dem gezeigten Ausführungsbeispiel je eine elektronisch geregelte Ablaufstelle 20, 30 für eine Rovingspule des hier Matrixfasermaterial aufweisenden ersten Faserbündels 2 und für eine Rovingspule des hier Verstärkungsfasermaterial aufweisenden ersten Faserbündels 3 auf. Der Abzug erfolgt tangential. Durch den elektronisch gesteuerten Abzug der Ablaufstellen 20, 30 ist kein Einzelfaserspannungsausgleich nach dem Ablaufgatter 1 erforderlich.

In dem gezeigten Ausführungsbeispiel kann für jede Ablaufstelle 20, 30 eine Abzugsspannung von 150 cN bis 2000 cN eingestellt werden, die sich über den kleiner werdenden Durchmesser der gesamten Spule nicht ändert.

Die Faserbündel 2, 3 werden aus dem Ablaufgatter 1 voneinander getrennten Walzen eines ersten S-Schlages 5.1 zugeführt, in welchem sie jeweils S-förmig über jeweils zwei dem Faserverlauf folgende Spuren enthaltende Walzen 6.1, 6.2 geführt werden. Die Walzen 6.1, 6.2 sind in der gezeigten Ausführungsform mit einer faserschonenden Beschichtung versehen. In dem ersten S-Schlag 5.1 kommt es zu einer Ausrichtung der Faserbündel 2, 3 und zur Vermeidung einer Zuführung von Drehungen in den folgenden Spreizschritt. Der erste S-Schlag 5.1 bildet somit eine Positioniereinheit.

Die Faserbündel 2, 3 werden anschließend in eine erste Spreizeinrichtung 7 gefördert, wobei die Fasern des Matrixmaterials 2 einer ersten Spreizebene 7.1 (erste Ebene) der ersten Spreizeinrichtung 7 und die Fasern des Verstärkungsmaterials 3 einer zweiten Spreizebene 7.2 (zweite Ebene) der ersten Spreizeinrichtung 7 zugeführt werden. In der ersten Spreizebene 7.1 erfolgt eine Aufspreizung des Matrixfaserrovings. In der zweiten Spreizebene 7.2 erfolgt eine Aufspreizung des Verstärkungsfaserrovings.

Die Spreizebenen 7.1., 7.2 können in dem gezeigten Ausführungsbeispiel unabhängig voneinander in der Höhe und/oder in ihrem Abstand voneinander eingestellt werden. In dem gezeigten Ausführungsbeispiel ist jede der Spreizebenen 7.1, 7.2 der ersten Spreizeinrichtung 7 mit je einem Servomotor, je einem Riemengetriebe und je einem Spindelhubgetriebe sowie Linearführungen vertikal verstellbar.

Im vorliegenden Ausführungsbeispiel sind in jeder der beiden Spreizebenen 7.1, 7.2 jeweils sieben Umlenkstäbe 8 angeordnet. Die Umlenkstäbe 8 dienen als Spreizelemente. Die Umlenkstäbe 8 sind in der dargestellten Ausführungsform Rohre, die eine gehärtete Oberfläche aufweisen und zudem mittels innenliegender Heizpatronen elektrisch beheizt werden können. Dadurch können die Spreizebenen 7.1, 7.2 mit unterschiedlichen Temperaturen betrieben werden.

Die Einspreiztiefe, die für die unterschiedliche Ausbreitung der Faserbündel 2, 3 durch unterschiedliche Umschlingung der Filamente und somit unterschiedliche Reibung verantwortlich ist, kann ebenso wie die Heiztemperatur der Umlenkstäbe 8 für jede der beiden Spreizebenen 7.1, 7.2 in der gezeigten Ausbildung der Erfindung unterschiedlich eingestellt werden.

Bei der Spreizung in der ersten Spreizeinrichtung 7 werden die Faserbündel 2 und 3, die in der Regel einen Strang aus Tausenden von Einzelfilamenten darstellen, jeweils so weit aufgespreizt, dass nicht beliebig viele Filamentlagen übereinander liegen, sondern nur wenige Filamentlagen. Nach dem Aufspreizen sollen die beiden Scharen von Einzelfilamenten der Faserbündel 2 und 3 vorzugsweise jeweils exakt die gleiche Breite aufweisen, um eine gleichmäßige Verteilung der Einzelfilamente im fertigen Hybridfaserbündel zu gewährleisten. Dies kann durch die Einstellung der Anordnung der Umlenkstäbe 8 und deren Temperatur erreicht werden. Die aufgespreizten Faserbündel 2, 3 spannen beim Verlassen der ersten Spreizeinrichtung 7 wiederum Ebenen auf.

Die aufgespreizten Faserbündel 2 und 3 werden in der gezeigten Ausführungsform anschließend einem zweiten S-Schlag 5.2 zugeführt, in welchem sie S-förmig über jeweils zwei dem Faserverlauf folgende Spuren enthaltende Walzen 6.3, 6.4 geführt werden. Die Walzen 6.3., 6.4 weisen eine faserschonende Beschichtung auf. Es kommt hier zu einer Ausrichtung der Faserbündel 2, 3 und zur Vermeidung von Drehungen im folgenden Spreizintensivierschritt.

Die Faserbündel 2 und 3 werden daraufhin in einem Zusammenführschritt übereinander zusammengeführt und einander überdeckend aufeinandergelegt. Es erfolgt somit eine Doublierung. Dabei erfolgt eine erste Durchmischung der Filamente der Faserbündel 2, 3.

Anschließend werden die übereinandergelegten Faserbündel 2, 3 einer zweiten Spreizeinrichtung 9 zugeführt. Die zweite Spreizeinrichtung 9 weist zueinander versetzt angeordnete Umlenkstäbe 10 auf, über welche die übereinandergelegten Faserbündel 2, 3 geführt und dabei weiter zu einem Mischfaserband aufgespreizt werden. Die Umlenkstäbe 10 bilden nur eine einzige Spreizebene. Die Umlenkstäbe 10 sind bei der gezeigten Ausbildung der erfindungsgemäßen Vorrichtung in ihrer Höhe und/oder ihrem Abstand zueinander verstellbar.

Die Höhe der durch die Umlenkstäbe 10 ausgebildeten Spreizebene wird bei der gezeigten Ausführungsform elektronisch über einen Servomotor eingestellt. Vorzugsweise wird die Höhe dieser Spreizebene über einen Servormotor mit Planetengetriebe gesteuert, der wiederum ein Riemengetriebe antreibt. Dieses Riemengetriebe besteht in der gezeigten Ausführungsform aus zwei horizontalen Riemenrädern, die an zwei vertikalen Trapezgewindespindeln angebracht sind. Ein zwischen den Riemenrädern befindlicher Riemen wird über eine Spannrolle gespannt. Die Trapezgewindespindeln treiben einen Träger der Umlenkstäbe 10 in vertikaler Richtung an. Der Träger selbst wird über vier senkrechte Führungsstangen geführt.

Die Umlenkstäbe 10 der zweiten Spreizeinrichtung 9 sind beheizt bzw. beheizbar.

Das Mischfaserband wird im Anschluss einem Lieferwerk 11 zugeführt. Das Lieferwerk 11 ist ein Mehrwalzenlieferwerk, in welchem versetzt angeordnete Lieferwerkswalzen 12 derart angeordnet sind, dass der Verlauf des Mischfaserbandes über die Lieferwerkswalzen 12 omegaförmig ist. In der gezeigten Ausführungsform weist das Lieferwerk 11 sieben Lieferwerkswalzen 12 auf. In dem Lieferwerk 11 wird aus dem Mischfaserband ein Hybridfaserbündel gebildet. In dem Lieferwerk 11 wird das Mischfaserband schlupffrei durch die omegaförmige Anordnung der Lieferwerkswalzen 12 abgezogen. Am Ausgang des Lieferwerkes 11 liegen die Filamente der ursprünglichen Faserbündel 2, 3 als homogen gemischtes Bändchen vor.

Im vorliegenden Ausführungsbeispiel ist die Erzeugung einer Hybridfaserstruktur aus zwei verschiedenen Ausgangsmaterialien dargestellt. Die Erfindung beinhaltet jedoch auch die Verwendung von mehr als zwei Ausgangsmaterialien. Die aufgespreizten Faserbündel werden dann in entsprechend mehr Ebenen geführt und miteinander vereinigt.

Die Erfindung gestattet es, die erzeugte Hybridfaserstruktur in verschiedener Weise weiterzuverarbeiten. Wie in Figur 1 zu erkennen ist, schließt sich an das Lieferwerk 11 eine Öse 13 an, durch die das Hybridfaserbündel in einem Aufwickelschritt geführt wird. Die Öse 13 kann beispielsweise eine Keramiköse sein. Anstelle der Öse 13 kann auch ein horizontaler S-Schlag, vorzugsweise aus beschichteten, beispielsweise aus mit TOPOCROM beschichteten, Stäben, verwendet werden. In der Öse 13 oder mit Hilfe des horizontalen S-Schlages wird die Hybridfaserstruktur zu einem Hybridfaserstrang bzw. Hybridfaserroving zusammengefasst und damit in eine endgültige Form mit rundem oder ovalem Querschnitt gebracht. Damit ist die Durchmischung von Matrixfaser und Verstärkungsfaser zu dem hier als Hybridfaserstrang bzw. Hybridfaserroving vorliegenden Hybridfaserbündel abgeschlossen.

Der ausgebildete Hybridfaserstrang bzw. Hybridfaserroving wird dann in dem gezeigten Ausführungsbeispiel mit einem Kreuzspulenwickler 14 beispielsweise auf eine 3-Zoll-Papphülse aufgewickelt bzw. aufgespult. Selbstverständlich sind auch andere Ausbildungen, Größen und Materialien von Mitteln, auf die der Hybridfaserstrang bzw. Hybridfaserroving aufgewickelt wird, möglich. Der Hybridfaserstrang bzw. Hybridfaserroving kann danach für eine Weiterverarbeitung genutzt werden.

In anderen Ausgestaltungen der Erfindung kann der erzeugte Hybridfaserstrang bzw. Hybridfaserroving auch ohne Aufwicklung direkt einem Weiterverarbeitungsprozess, beispielsweise tangential, zugeführt werden.

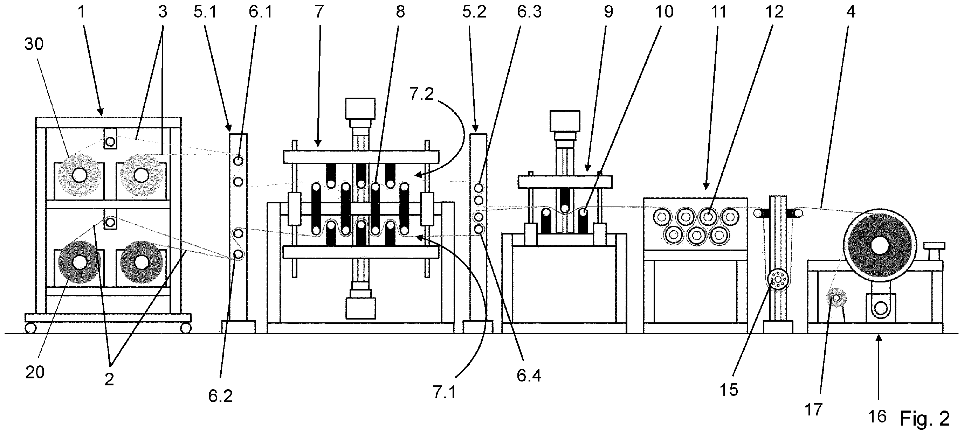

Eine weitere, in Figur 2 dargestellte Variante der Weiterverarbeitung besteht darin, das Hybridfaserbündel als Hybridfaserband bzw. Hybridfasertape auszubilden. Die Herstellung des Hybridfaserbandes bzw. Hybridfasertapes ist mit der oben im Hinblick auf Figur 1 beschriebenen Herstellung des Hybridfaserstranges bzw. Hybridfaserrovings bis zum Ausgang aus dem Lieferwerk 11 gleich.

Es ist jedoch bei der Herstellung von Hybridfaserbändern bzw. Hybridfasertapes nach Figur 2 im Unterschied zu Figur 1 möglich, mehrere einzelne Hybridfaserbündel in einer Ebene nebeneinander herzustellen und zu führen. Dadurch kann ein breites Hybridfaserband oder -tape, beispielsweise mit einer Breite von 30 bis 70 mm, vorzugsweise von 50 mm Breite, hergestellt werden. Um dies zu ermöglichen, werden von dem Ablaufgatter 1 sowohl von dem ersten Fasermaterial, bevorzugt Matrixfasermaterial, als auch von dem zweiten Fasermaterial, bevorzugt Verstärkungsfasermaterial, jeweils 2 oder 3 Spulen zugeführt und nebeneinander ohne Lücke jeweils in einer Ebene zum Spreizen ausgebreitet. Je nach Feinheit des verwendeten ersten oder zweiten Faserbündel bzw. der entsprechenden Rovings können die jeweiligen Faserbündel auch von mehr als 3 Spulen pro Ebene zugeführt werden. Faserbündel bzw. Rovings mit geringeren Feinheiten können nicht so stark aufgespreizt werden wie Faserbündel bzw. Rovings mit größeren Feinheiten. Daher wird/werden bei Verwendung von ersten und/oder zweiten Faserbündeln bzw. Rovings mit geringeren Feinheiten mehr erste und/oder zweite Faserbündel bzw. Rovings pro Ebene benötigt, um die geforderte Bandbreite von beispielsweise 50 mm zu erreichen. Das folgende Verfahren ist bis auf die Formung des Hybridfaserbündels und das Aufwickeln analog zu dem Verfahren nach Figur 1.

Selbstverständlich kann auch nur ein einziges Hybridfaserband oder -tape mit der Ausführungsform nach Figur 2 erzeugt werden, wobei das erste Fasermaterial, bevorzugt das Matrixfasermaterial, und das zweite Fasermaterial, bevorzugt das Verstärkungsfasermaterial, nur jeweils durch eine einzige Spule des Ablaufgatters 1 bereitgestellt wird. Da das vorzugsweise als erstes Material verwendete Matrixmaterial eine meistens viel geringere Feinheit im Vergleich zum vorzugsweise als zweites Material verwendeten Verstärkungsmaterial aufweist, wird das wenigstens eine verwendete Matrixmaterial meistens über mehr als eine Spule bereitgestellt, um beispielsweise Mischungsverhältnisse von Matrixmaterial und Verstärkungsmaterial von 50 % : 50 % oder von 60 % : 40 % zu erreichen. Die nachfolgenden Ausführungen gelten dann jeweils nur für dieses eine Hybridfaserband bzw. -tape.

Die aus dem Lieferwerk 11 austretenden Hybridfaserbänder bzw. Hybridfasertapes werden in Figur 2 mit einem Scheibenspulenwickler 16 auf eine Scheibenspule aufgewickelt. In dem gezeigten Ausführungsbeispiel hat die Scheibenspule eine Band- oder Tapebreite von zwei bis drei Hybridsträngen bzw. Hybridrovings, was in der beispielhaft gezeigten Ausbildung der Erfindung maximal 50 mm entspricht. Dabei wird dem Scheibenspulenwickler 16 gleichzeitig und flächendeckend mit den Hybridfaserbändern bzw. Hybridfasertapes ein Trennmedium 17, wie Trennpapier, zugeführt. Das Trennmedium dient der Trennung der Einzelfasern bei der Aufwicklung. In diesem Falle ist es wichtig, dass die Filamente in der Hybridfaserstruktur gassenfrei verlaufen. Eine dementsprechende Führung der Faserbündel 2 und 3 in den Aggregaten der Vorrichtung gewährleistet dies.

Vor dem Aufwickelschritt werden die Hybridfaserbündel unter einer mit dem Scheibenspulenwickler 16 gekoppelten Tänzerwalze eines Tänzers 15 bzw. Tapetänzers mit wenigstens einem Sensor, wie einem Durchmessersensor, entlanggeführt.

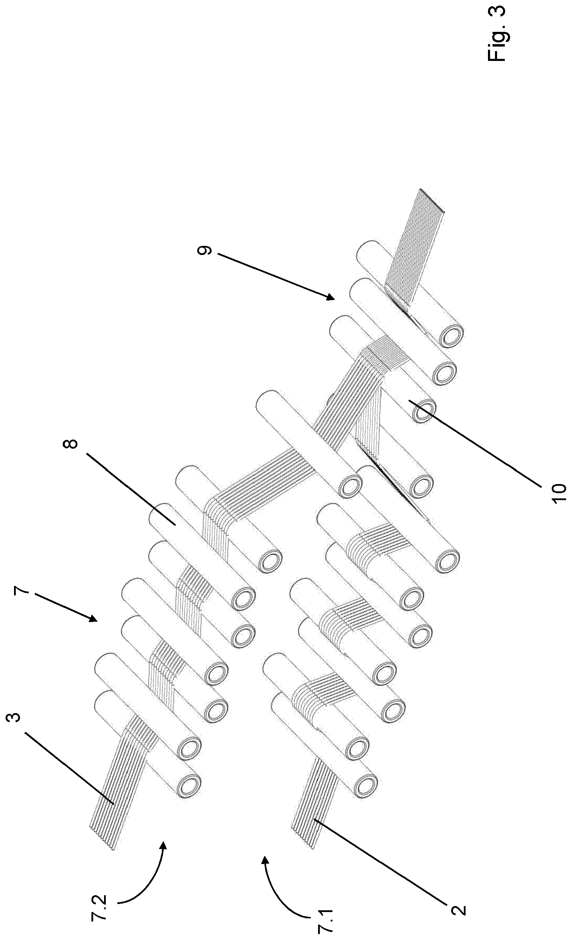

Figur 3 zeigt eine Detailansicht der Überdeckungszone der beiden Filamentebenen.

In der ersten Spreizeinrichtung 7 werden die beiden Faserbündel 2 und 3 in zwei Spreizebenen 7.1 und 7.2 getrennt voneinander aufgespreizt. Bevor die Faserbündel 2 und 3 der zweiten Spreizeinrichtung 9 zugeführt werden, werden sie in einem Zusammenführschritt einander überdeckend aufeinandergelegt. Der S-Schlag ist dabei in Figur 3 nicht dargestellt. Die zweite Spreizeinrichtung 9 weist zueinander versetzt angeordnete Umlenkstäbe 10 auf, über welche die übereinandergelegten Faserbündel 2, 3 geführt und dabei weiter zu einem Mischfaserband aufgespreizt werden.

Die Zusammenführung der beiden Faserbündel 2 und 3 erfolgt dabei auf einem Unterstützungselement, welches im dargestellten Ausführungsbeispiel durch den Umfang des ersten Umlenkstabes 10 der zweiten Spreizeinrichtung 9 verkörpert wird. Damit wird die untere Filamentebene aus den Faserbündeln 2 mechanisch abgestützt, während die obere Filamentebene aus den Faserbündeln 3 auf diese aufläuft und sie überdeckt. Da die obere Spreizebene 7.2 dafür sorgt, dass die obere Filamentebene aus den Faserbündeln 3 unter einer höheren Zugspannung steht als die untere Filamentebene 7.1 aus den Faserbündeln 2, dringen die Filamente der Faserbündel 3 zwischen die Filamente der Faserbündel 2 ein und erzeugen eine Hybridfaserstruktur mit einer innigen Durchmischung derselben.

## Patentansprüche

1. Verfahren zur Herstellung eines Hybridfaserbündels (4), bei dem in einem Spreizschritt in einer ersten Ebene (7.1) einer Vorrichtung ein erstes Faserbündel (2) mit Fasern eines ersten Materials und in einer zweiten Ebene (7.2) der Vorrichtung ein zweites Faserbündel (3) mit Fasern eines zweiten Materials jeweils über zueinander versetzte, beheizte Umlenkstäbe (8) geführt und dadurch getrennt voneinander gespreizt werden und anschließend in einem Zusammenführschritt einander überdeckend aufeinander gelegt werden,
wobei die ersten und zweiten Faserbündel (2, 3) vor und/oder nach dem Spreizschritt S-förmig über jeweils wenigstens zwei Walzen (6.1, 6.2, 6.3, 6.4), welche dem Faserverlauf folgende Spuren aufweisen, geführt werden und ein aus den gespreizten und übereinander gelegten ersten und zweiten Faserbündeln (2, 3) ausgebildetes Mischfaserband omegaförmig oder mäanderförmig über wenigstens drei Lieferwerkswalzen (12) eines Lieferwerkes (11) geführt wird, wodurch das Hybridfaserbündel (4) gebildet wird, wobei unter omegaförmig verstanden wird, dass der Umschlingungswinkel des Mischfaserbandes um die Lieferwerkswalzen (12) jeweils wenigstens 270° beträgt, und wobei unter mäanderförmig verstanden wird, dass der Umschlingungswinkel des Mischfaserbandes um die Lieferwerkswalzen (12) jeweils wenigstens 180° beträgt.

2. Verfahren nach Anspruch 1, **dadurch gekennzeichnet, dass** die gespreizten und übereinander gelegten ersten und zweiten Faserbündel (2, 3) nach dem Übereinanderlegen in einem Spreizintensivierschritt über zueinander versetzte Umlenkstäbe (10) geführt und dabei weiter zu dem Mischfaserband aufgespreizt werden.

3. Verfahren nach einem der vorhergehenden Ansprüche, **dadurch gekennzeichnet, dass** das erste Faserbündel (2) und das zweite Faserbündel (3) in dem Spreizschritt auf eine identische Breite gespreizt werden.

4. Verfahren nach einem der vorhergehenden Ansprüche, **dadurch gekennzeichnet, dass** das Hybridfaserbündel (4) in einem Aufwickelschritt durch eine Öse (13) oder einen horizontalen S-Schlag geführt wird und der dabei entstehende Hybridfaserstrang mit einem Kreuzspulenwickler (14) aufgewickelt wird.

5. Verfahren nach einem der Ansprüche 1 bis 3, **dadurch gekennzeichnet, dass** das Hybridfaserbündel (4) als Hybridfaserband in einem Aufwickelschritt mit einem Scheibenspulenwickler (16) aufgewickelt wird, wobei dem Scheibenspulenwickler (16) gleichzeitig und flächendeckend mit dem Hybridfaserband wenigstens ein Trennmedium (17) zugeführt wird.

6. Verfahren nach Anspruch 4 oder 5, **dadurch gekennzeichnet, dass** das Hybridfaserbündel (4) vor dem Aufwickelschritt unter einen mit dem Kreuzspulenwickler (14) oder dem Scheibenspulenwickler (16) gekoppelten Tänzer (15) entlang geführt wird.

7. Vorrichtung zur Herstellung eines Hybridfaserbündels (4), aufweisend
- wenigstens drei erste, in einer ersten Ebene (7.1) der Vorrichtung zueinander versetzt angeordnete, beheizbare Umlenkstäbe (8) zum Aufspreizen eines ersten Faserbündels (2), und
- wenigstens drei zweite, in einer zweiten Ebene (7.2) der Vorrichtung zueinander versetzt angeordnete, beheizbare Umlenkstäbe (8) zum Aufspreizen eines zweiten Faserbündels (3),
wobei die zweite Ebene (7.2) oberhalb der ersten Ebene (7.1) ist, und
- ein Unterstützungselement, das das gespreizte erste Faserbündel (2) mechanisch abstützt, während das gespreizte zweite Faserbündel (3) auf das gespreizte erste Faserbündel (2) aufläuft;
wobei die Vorrichtung wenigstens einen S-Schlag (5.1, 5.2) mit Spuren zur Faserführung enthaltenden Walzen (6.1, 6.2, 6.3, 6.4) aufweist und die Vorrichtung weiterhin ein Lieferwerk (11) mit wenigstens drei, zueinander versetzt angeordneten Lieferwerkswalzen (12) mit einer omegaförmigen oder mäanderförmigen Bandführungsrichtung aufweist, wobei unter omegaförmig verstanden wird, dass der Umschlingungswinkel eines aus den gespreizten und übereinander gelegten ersten und zweiten Faserbündeln (2, 3) ausgebildeten Mischfaserbandes um die Lieferwerkswalzen (12) jeweils wenigstens 270° beträgt, und wobei unter mäanderförmig verstanden wird, dass der Umschlingungswinkel des Mischfaserbandes um die Lieferwerkswalzen (12) jeweils wenigstens 180° beträgt.

8. Vorrichtung nach Anspruch 7, **dadurch gekennzeichnet, dass** das Lieferwerk (11) sieben Lieferwerkswalzen (12) aufweist.

9. Vorrichtung nach Anspruch 7 oder 8, **dadurch gekennzeichnet, dass** die ersten Umlenkstäbe (8) in der ersten Ebene (7.1) und/oder die zweiten Umlenkstäbe (8) in der zweiten Ebene (7.2) unabhängig voneinander in ihrer Höhe und/oder Temperatur einstellbar sind.

10. Vorrichtung nach einem der Ansprüche 7 bis 9, **dadurch gekennzeichnet, dass** die Oberflächentemperatur der ersten und der zweiten Umlenkstäbe (8) in einem Bereich bis 250 °C liegt.

## Claims

1. Method for producing a hybrid fiber bundle (4), in which, in a spreading step, a first fiber bundle (2) having fibers of a first material is guided in a first plane (7.1) of a device and a second fiber bundle (3) having fibers of a second material is guided in a second plane (7.2) of the device, in each case via mutually offset, heated deflection rods (8), and are thus spread apart from one another and are subsequently placed on top of one another in a merging step so as to overlap, wherein the first and second fiber bundles (2, 3), before and/or after the spreading step, are guided in an S-shape via at least two rollers (6.1, 6.2, 6.3, 6.4) that comprise tracks following the fiber course, and a mixed sliver formed from the first and second fiber bundles (2, 3) that are spread and placed on top of one another is guided in an omega-shaped or meandering manner via at least three delivery mechanism rollers (12) of a delivery mechanism (11), as a result of which the hybrid fiber bundle (4) is formed, wherein omega-shaped means that the angle of wrap of the mixed sliver around the delivery mechanism rollers (12) is at least 270° in each case, and meandering means that the angle of wrap of the mixed sliver around the delivery mechanism rollers (12) is at least 180° in each case.

2. Method according to claim 1, **characterized in that,** after being placed on top of one another, the first and second fiber bundles (2, 3) that are spread and placed on top of one another are guided via mutually offset deflection rods (10) in a spread-intensifying step, and are thus further spread to form the mixed sliver.

3. Method according to either of the preceding claims, **characterized in that** the first fiber bundle (2) and the second fiber bundle (3) are spread to an identical width in the spreading step.

4. Method according to any of the preceding claims, **characterized in that** the hybrid fiber bundle (4) is guided through an eyelet (13) or a horizontal S-turn in a winding step, and the resulting hybrid fiber strand is wound using a cross bobbin winder (14).

5. Method according to any of claims 1 to 3, **characterized in that** the hybrid fiber bundle (4) is wound as a hybrid sliver in a winding step by means of a flanged spool winder (16), at least one separating medium (17) being fed to the flanged spool winder (16) simultaneously and in a surface-covering manner with the hybrid sliver.

6. Method according to either claim 4 or claim 5, **characterized in that,** before the winding step, the hybrid fiber bundle (4) is guided along under a dancer (15) coupled to the cross bobbin winder (14) or the flanged spool winder (16).

7. Device for producing a hybrid fiber bundle (4), comprising
- at least three first heatable deflection rods (8) that are arranged offset to one another in a first plane (7.1) of the device for spreading a first fiber bundle (2), and
- at least three second heatable deflection rods (8) that are arranged offset to one another in a second plane (7.2) of the device for spreading a second fiber bundle (3), wherein the second plane (7.2) is above the first plane (7.1), and
- a support element that mechanically supports the spread first fiber bundle (2) while the spread second fiber bundle (3) runs onto the spread first fiber bundle (2);
wherein the device comprises at least one S-turn (5.1, 5.2) having rollers (6.1, 6.2, 6.3, 6.4) that contain tracks for fiber guidance, and the device also comprises a delivery mechanism (11) having at least three delivery mechanism rollers (12) that are arranged offset to one another and have an omega-shaped or meandering sliver guiding direction, wherein omega-shaped means that the angle of wrap around the delivery mechanism rollers (12) of a mixed sliver formed from the first and second fiber bundles (2, 3) that are spread and placed on top of one another is at least 270° in each case, and meandering means that the angle of wrap of the mixed sliver around the delivery mechanism rollers (12) is at least 180° in each case.

8. Device according to claim 7, **characterized in that** the delivery mechanism (11) comprises seven delivery mechanism rollers (12).

9. Device according to either claim 7 or claim 8, **characterized in that** the height and/or temperature of the first deflection bars (8) in the first plane (7.1) and/or the second deflection bars (8) in the second plane (7.2) can be adjusted independently of one another.

10. Device according to any of claims 7 to 9, **characterized in that** the surface temperature of the first and second deflection bars (8) is in a range of up to 250°C.

## Revendications

1. Procédé de fabrication d'un faisceau de fibres hybrides (4), dans lequel, dans une étape d'écartement, dans un premier plan (7.1) d'un dispositif, un premier faisceau de fibres (2) comportant des fibres d'un premier matériau et, et dans un second plan (7.2) du dispositif, un second faisceau de fibres (3) comportant des fibres d'un second matériau sont respectivement guidés sur des tiges de déviation (8) chauffées décalées les unes des autres et sont ainsi écartés séparés l'un de l'autre, puis, dans une étape de fusion, sont superposés l'un sur l'autre de manière à se chevaucher,
dans lequel les premier et second faisceaux de fibres (2, 3), avant et/ou après l'étape d'écartement, sont guidés en forme de S sur respectivement au moins deux rouleaux (6.1, 6.2, 6.3, 6.4), lesquels comportent des pistes suivant le fibrage, et une bande de fibres mélangées, formée à partir des premier et second faisceaux de fibres (2, 3) écartés et superposés l'un sur l'autre, est guidée sur au moins trois rouleaux de mécanisme d'alimentation (12) d'un mécanisme d'alimentation (11) en forme d'oméga ou de forme sinueuse, le faisceau de fibres hybrides (4) étant formé, dans lequel la forme en oméga signifie que l'angle d'enroulement de la bande de fibres mélangées autour des rouleaux de mécanisme d'alimentation (12) est de respectivement au moins 270 °, et dans lequel la forme sinueuse signifie que l'angle d'enroulement de la bande de fibres mélangées autour des rouleaux de mécanisme d'alimentation (12) est de respectivement au moins 180 °.

2. Procédé selon la revendication 1, **caractérisé en ce que** les premier et second faisceaux de fibres (2, 3) écartés et superposés l'un sur l'autre, après la superposition l'un sur l'autre, sont guidés sur des tiges de déviation (10) décalées les unes des autres dans une étape d'intensification d'écartement, et sont ainsi encore écartés pour former la bande de fibres mélangées.

3. Procédé selon l'une des revendications précédentes, **caractérisé en ce que** le premier faisceau de fibres (2) et le second faisceau de fibres (3) sont écartés sur une largeur identique à l'étape d'écartement.

4. Procédé selon l'une quelconque des revendications précédentes, **caractérisé en ce que** le faisceau de fibres hybrides (4), dans une étape d'enroulement, est guidé à travers un oeillet (13) ou un profilé cambré horizontale et le brin de fibres hybrides résultant est enroulé au moyen d'un enrouleur à bobines croisées (14).

5. Procédé selon l'une quelconque des revendications 1 à 3, **caractérisé en ce que** le faisceau de fibres hybrides (4) est enroulé sous la forme d'une bande de fibres hybrides dans une étape d'enroulement à l'aide d'un enrouleur à bobines à joues (16), dans lequel au moins un milieu de séparation (17) est fourni à l'enrouleur à bobines à joues (16) simultanément et en recouvrant toute la surface avec la bande de fibres hybrides.

6. Procédé selon la revendication 4 ou 5, **caractérisé en ce que,** avant l'étape d'enroulement, le faisceau de fibres hybrides (4) est guidé sous un danseur (15) accouplé à l'enrouleur à bobines croisées (14) ou à l'enrouleur à bobines à joues (16).

7. Dispositif de fabrication d'un faisceau de fibres hybrides (4), comprenant
- au moins trois premières tiges de déviation (8) pouvant être chauffées disposées décalées les unes par rapport aux autres dans un premier plan (7.1) du dispositif pour écarter un premier faisceau de fibres (2), et
- au moins trois secondes tiges de déviation (8) pouvant être chauffées et disposées décalées les unes par rapport aux autres dans un second plan (7.2) du dispositif pour écarter un second faisceau de fibres (3),
dans lequel le second plan (7.2) est au-dessus du premier plan (7.1), et
- un élément de support, lequel supporte mécaniquement le premier faisceau de fibres (2) écarté tandis que le second faisceau de fibres (3) écarté s'étend sur le premier faisceau de fibres (2) écarté ;
dans lequel le dispositif comporte au moins un profilé cambré (5.1, 5.2) comportant des rouleaux (6.1, 6.2, 6.3, 6.4) comportant des pistes pour le fibrage et le dispositif comporte également un mécanisme d'alimentation (11) comportant au moins trois rouleaux de mécanisme d'alimentation (12) disposés décalés les uns par rapport aux autres et comportant une direction de guidage de bande en forme d'oméga ou de forme sinueuse, dans lequel la forme en oméga signifie que l'angle d'enroulement d'une bande de fibres mélangées, formée à partir des premier et second faisceaux de fibres (2, 3) écartés et superposés l'un sur l'autre, autour des rouleaux de mécanisme d'alimentation (12) est de respectivement au moins 270 °, et la forme sinueuse signifie que l'angle d'enroulement de la bande de fibres mélangées autour des rouleaux de mécanisme d'alimentation (12) est de respectivement au moins 180 °.

8. Dispositif selon la revendication 7, **caractérisé en ce que** le mécanisme d'alimentation (11) comporte sept rouleaux de mécanisme d'alimentation (12).

9. Dispositif selon la revendication 7 ou 8, **caractérisé en ce que** les premières tiges de déviation (8) dans le premier plan (7.1) et/ou les secondes tiges de déviation (8) dans le second plan (7.2) peuvent être réglées en hauteur et/ou en température indépendamment les unes des autres.

10. Dispositif selon l'une quelconque des revendications 7 à 9, **caractérisé en ce que** la température de surface des premières et des secondes tiges de déviation (8) se situe dans une plage allant jusqu'à 250 °C.
